# EUROPÄISCHE PATENTSCHRIFT

(11) **EP 0 893 866 B1**
(45) Veröffentlichungstag und Bekanntmachung des Hinweises auf die Patenterteilung: **03.07.2002**
(21) Anmeldenummer: 98111060.4
(22) Anmeldetag: 17.06.1998
(51) Int. Cl.: H02G 3/12

(54) **Unterputzinstallationsdose**
Flush-mounted installation box
Dispositif d'installation d'un boîtier encastrable

(30) Priorität: 19.07.1997 DE 19731091
(43) Veröffentlichungstag der Anmeldung: 27.01.1999
(73) Patentinhaber: ABB PATENT GmbH, 68526 Ladenburg (DE)
(72) Erfinder: Blacquière, Klaas Jacobus, 3513 AN Utrecht (NL)
(74) Vertreter: Miller, Toivo

(56) Entgegenhaltungen:
- DE-A- 3 148 113
- DE-A- 3 403 053
- DE-U- 7 048 119

## Beschreibung

Die Erfindung betrifft eine Unterputzinstallationsdose nach dem Oberbegriff des Anspruches 1.

Solche Unterputzinstallationsdosen werden in eine Öffnung in einer Wand eingesetzt, die ggf. anschließend verputzt werden muß. Je nach Dicke des aufgetragenen Putzes kann der freie Rand der Installationsdose deutlich unterhalb der Putzoberfläche liegen, so daß ein Anpaßring eingesetzt werden muß, damit die Dose mit der Putzoberfläche bündig wird. Dies erfolgt dadurch, daß der Anpaßring mittels Schrauben verstellt wird.

Ein solcher, als zylindrische Verlängerung bezeichneter Anpaßring ist aus der DE 31 48 113 A 1 bekannt geworden. Zu diesem Zweck besitzt die Unterputzdose eine an ihrer freien Endkante vorgesehene umlaufende Ringnut, an deren radial außen liegender Wand zwischen Rillen befindliche Leisten vorgesehen sind, die in entsprechende Rillen an der zylindrischen Verlängerung eingreifen. Maßnahmen zur Versteifung der Verlängerung sind nicht dargestellt.

Aus dem DE- U- 70 48 119 ist ein rechteckiger bzw. viereckiger Unterputzabzweigkasten bekannt geworden, in dessen Unterteil ein entsprechend geformtes Oberteil eingesteckt werden kann. An einem Teilbereich der Innenwandung des Unterteiles befindet sich eine Leiste, die in Rillen am Oberteil eingreifen, wobei eine Verrastung in unterschiedlichen Stellungen des Unterputzkastens zum Einsteckteil erreicht werden kann.

Besondere Maßnahmen zur Versteifung der Verlängerung bzw. des Einsteckteils sind nicht beschrieben.

Aufgabe der Erfindung ist es, einen einrastbaren Anpaßring zu schaffen, der zur Montage ausreichend biegbar, nach der Montage ausreichend steif ist.

Diese Aufgabe wird erfindungsgemäß gelöst durch die kennzeichnenden Merkmale des Anspruches 1.

Zur Erzielung einer Biegbarkeit und einer ausreichenden Steifigkeit nach der Montage besitzt der Anpaßring erfindungsgemäß wenigstens eine bistabile Kniehebelanordnung, die aus zwei an einem Ende gelenkig miteinander und an den anderen Enden gelenkig mit dem übrigen Ringbereich verbundenen Ringbogenabschnitten gebildet sind, die im montierten Zustand den Anpaßring, kurz auch Ring genannt zu einem geschlossenen Ring ergänzen.

Vor der Montage sind die Ringbogenabschnitte nach innen gedrückt in eine erste stabile Stellung, so daß der Ring in diesem Bereich praktisch unterbrochen bzw. geteilt ist und eine leichte Biegbarkeit und mit seinen Nuten oder Rillen so an die Leiste der Installationsdose angesetzt werden kann, daß die Leiste in die entsprechende Nut eingreifen kann. Danach werden die beiden Bogenabschnitte nach außen gedrückt, so daß sie den Ring zu einem stabilen und steifen Ring ergänzen. Die Ringbogenabschnitte nehmen demgemäß zwei stabile Stellungen ein, eine nach innen gedrückte erste stabile Stellung, in der der Ring leicht biegbar ist, und eine zweite, nach außen gedrückte Stellung, in der die Ringbogenabschnitte sich mit dem übrigen Ringbereich zu einem vollständigen Ring ergänzen und diesen Ring dann auch ausreichend versteifen.

Erfindungsgemäß können zwei diametral gegenüberliegende oder mehr Kniehebelanordnungen vorgesehen sein, wobei bei drei oder mehr diese am Umfang gleichmäßig verteilt sind.

Die Ringbogenabschnitte sind dabei geringfügig länger am Umfang als es der dort befindliche Ringbogenabschnitt wäre. Dadurch ergeben sich die beiden stabilen Lagen mit einer dazwischen befindlichen Totpunktstellung.

Weitere vorteilhafte Ausgestaltungen und Verbesserungen der Erfindung sind den weiteren Unteransprüchen zu entnehmen.

Anhand der Zeichnung, in der ein Ausführungsbeispiel der Erfindung dargestellt ist, sollen die Erfindung sowie weitere vorteilhafte Ausgestaltungen und Verbesserungen der Erfindung näher erläutert und beschrieben werden.

Es zeigen:
- Fig. 1: eine Schnittansicht durch eine Installationsdose mit eingesetztem Ring, und
- Fig. 2: eine perspektivische Ansicht des Anpaßringes.

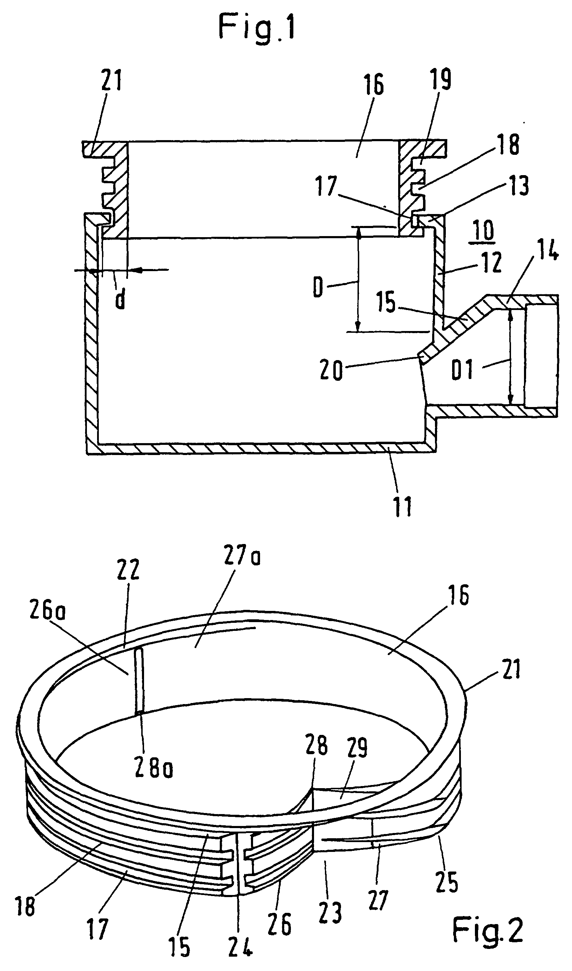

Die Installationsdose 10 gemäß Fig. 1 besitzt einen Bodenabschnitt 11 und einen daran anschließenden zylindrischen Abschnitt 12, an dessen freier Endkante eine nach innen radial vorspringende Leiste 13 angeformt ist. In der Zylinderwandung 12 ist ein Abzweigrohr 14 eingeformt, dessen Innendurchmesser D sich durch eine Abschrägung 15 verjüngt, so daß im Bereich des Abzweigrohres 14 ein axialer Innenwandungsbereich ohne eine Innendurchmesserverringerung vorhanden ist.

An die Installationsdose 10 ist ein Anpaßring 16 angesetzt, der an seinem Außenumfang drei Rillen 17, 18 und 19 aufweist, die so bemessen sind, daß die Leiste 13 in die Rillen 17, 18 oder 19 eingreifen kann. Die Abschrägung 15 mit dem Innenwandungsabschnitt D ist erforderlich, damit die Leiste 13 auch in die Rille 19 eingreifen kann, ohne daß der Anpaßring durch einen evtl. vorhandenen Innenvorsprung 20 im Bereich des Abzweigrohres 14 gestört wird.

An der dem Boden 11 entgegengesetzt liegenden Stirnkante des Anpaßringes 16 befindet sich eine Flanschleiste 21, deren Außendurchmesser dem Außendurchmesser der Installationsdose 10 entspricht.

Es sei nun Bezug genommen auf die Fig. 2.

Der Anpaßring 16, der eine zylindrische Form aufweist, besitzt an seinem Außenumfang die Rillen 17, 18 und 19, in die jeweils die Leiste 13 eingreifen kann. Außerdem ist auch der geschlossene Flanschrand 21 dargestellt.

Der Anpaßring 16 besitzt nun an seinem Umfang zwei Aussparungen 22 und 23, die sich diametral gegenüberliegen und einen bestimmten Umfangsabschnitt einnehmen. An den senkrecht, d. h. axial verlaufenden Kanten 24 und 25 der Aussparung 22 und 23 (nur die Kanten 24 und 25 sind zu sehen) sind Ringbogenabschnitte 26 und 27 mittels eines Filmscharniers (nicht dargestellt) angelenkt, deren aufeinander zuweisende Enden miteinander ebenfalls mittels eines Filmscharnieres bei 28 gelenkig verbunden sind. Wie aus Fig. 2 ersichtlich, verringert sich die Dicke d der Ringbogenabschnitte bis zum Bereich des Filmscharniers 28, wobei diese Dickenverringerung durch eine Abschrägung 29 gebildet ist, die etwa im mittleren Bereich jedes Ringbogenabschnittes 26 und 27 beginnt. Die Bezugsziffer 29 deutet nur auf den Ringbogenabschnitt 27 hin; der Ringbogenabschnitt 26 besitzt ebenfalls eine Abschrägung (ohne Bezugsziffer). Gleiches gilt auch für die Ringbogenabschnitte 26a, 26b in der Aussparung 22.

Die Bogenlänge der Ringbogenabschnitte 26, 26a und 27, 27a ist um ein geringes Maß größer als es entsprechende Bogenabschnitte im übrigen Ringbereich wären; erst aufgrund der größeren Bogenlänge können die miteinander verbundenen Ringbogenabschnitte 26 und 27 bzw. 26a, 27a nach innen geklappt werden, wie in Fig. 2 im Bereich des Ausschnittes 23 dargestellt ist. Die Ringbogenabschnitte im Bereich der Aussparung 22 besitzen zur Verdeutlichung der Identität der jeweiligen Ringbogenabschnitte die gleichen Bezugsziffer wie die der Aussparung 23, sie besitzen also einen Ringbogenabschnitt 26a und 27a. Die beiden Ringbogenabschnitte 26a und 27a sind nun nach außen gedrückt, wobei sie bei diesem Bewegungsvorgang eine Totpunktlage überschritten haben, die aufgrund der vergrößerten Bogenlänge der beiden Ringbogenabschnitte 26, 26a und 27, 27a gegeben ist. Sobald diese Totpunktlage überschritten ist, schnappen die beiden Ringbogenabschnitte 26, 26a und 27, 27a in die zweite stabile Stellung, in der sie den Anpassring zu einem geschlossenen Ring ergänzen, wie in der Fig. 2 im Bereich der Aussparung 22 dargestellt und erkennbar ist.

Wenn die beiden Ringbogenabschnitte 26, 27; 26a, 27a in der ersten, nach innen gedrückten stabilen Lage oder Stellung sind, dann ist der Ring 16 nur durch den Flanschring 21 in Form gehalten und er kann demgemäß so verformt werden, daß die Rillen 17, 18 oder 19 über die Leiste 13 geschnappt werden können. Wenn dies der Fall ist, wie in Fig. 1 dargestellt, dann werden die Ringbogenabschnitte 26, 27; 26a, 27a nach außen gedrückt, so daß sie den Anpaßring 16 versteifen.

Da die Bogenlänge der Ringbogenabschnitte größer ist als die entsprechende Bogenlänge der Aussparungen 22 oder 23, würden die Ringbogenabschnitte 26, 27; 26a, 27a im Bereich ihrer Filmscharniere 28, 28a den Außenumfang des Ringes überschreiten bzw. würden von der Leiste 13 bzw. der Innenwandung 12 festgehalten in einer Stellung, in der die Totpunktlage möglicherweise noch nicht überschritten ist. Für diesen Fall sind die Abschrägungen 29 vorgesehen, so daß sich das Filmscharnier ausreichend weit radial nach außen bewegen kann und die Innenwandung des Ringes 16 mit den Ringbogenabschnitten 26, 27; 26a, 27a in der Innenkreisringfläche des Anpaßringes oder geringfügig außerhalb zu liegen kommen, wodurch verhindert wird, daß durch die Ringbogenabschnitte 26, 27; 26a, 27a eine Verringerung des Innendurchmessers des Anpaßringes 16 bewirkt wird.

## Patentansprüche

1. Unterputzinstallationsdose, mit einem topfförmigen Dosenkörper, an dessen freiem Rand ein Anpaßring (16) in unterschiedlichen Stellungen ansetzbar ist, der Anpaßring (16) wenigstens eine umlaufende Rille (17, 18, 19) aufweist, in die eine umlaufende, radial nach innen vorspringende Leiste (13) am freien Endrand der Installationsdose (10) einrastbar und nach Montage eingerastet ist, **dadurch gekennzeichnet, daß** der Anpaßring (16) wenigstens eine bistabile Kniehebelanordnung aus zwei an einem Ende (28, 28a) gelenkig miteinander und an den anderen Enden (24, 25) gelenkig mit dem übrigen Ringbereich verbundenen Ringbogenabschnitten (26, 27; 26a, 27a) aufweist, die in einer ersten stabilen Stellung nach innen vorspringen und dadurch eine Biegbarkeit des Ringes bewirken, und in der anderen, zweiten stabilen Stellung nach Überwinden einer Totpunktlage sich in den Ringumfang einpassen und den Anpaßring (16) in dieser Stellung versteifen.

2. Unterputzinstallationsdose nach Anspruch 1, **dadurch gekennzeichnet, daß** zwei diametral gegenüberliegende oder mehr Kniehebelanordnungen (26, 27; 26a, 27a) vorgesehen sind, die gleichmäßig am Umfang verteilt sind.

3. Unterputzinstallationsdose nach Anspruch 1 oder 2, **dadurch gekennzeichnet, daß** die Bogenlänge der Ringbogenabschnitte (26, 27; 26a, 27a) geringfügig größer ist als die entsprechende Bogenlänge des übrigen Ringbereiches, so daß die Ringbogenabschnitte (26, 27; 26a, 27a) in ihrer ersten stabilen Stellung nach innen vorspringen.

4. Unterputzinstallationsdose nach Anspruch 3, **dadurch gekennzeichnet, daß** die radiale Dicke der Ringbogenabschnitte (26, 27; 26a, 27a) mindestens von der Mitte aus hin zu dem Ende, an dem sie miteinander verbunden sind, sich verringert.

5. Unterputzinstallationsdose nach einem der vorherigen Ansprüche, **dadurch gekennzeichnet, daß** die Verbindungen der Ringbogenabschnitte (26, 27; 26a, 27a) miteinander und mit dem übrigen Ringbereich mittels einer Filmscharnierverbindung erzielt ist.

## Claims

1. A flush-mounted installation box, having a pot-type box body on whose free edge there can be placed an adaptor ring (16) in different positions, with said adaptor ring (16) comprising at least one circular groove (17, 18, 19) into which a radially inwardly projecting strip (13) can be latched into the free end edge of the installation box (10) and remain latched in after the mounting, **characterized in that** the adaptor ring (16) comprises at least one bistable toggle arrangement made of two ring arc sections (26, 27; 26a, 27a) which are mutually connected in an articulated manner at one end (28, 28a) and are connected in an articulated manner with the remaining ring zone at the other ends (24, 25) and which project inwardly in a first stable position and thus produce a flexibility of the ring and fit into the ring circumference in another, second stable position after overcoming the dead center position and stiffen the adaptor ring (16) in said position.

2. A flush-mounted installation box as claimed in claim 1, **characterized in that** two diametrically opposite or more toggle arrangements (26, 27; 26a, 27a) are provided which are distributed evenly about the circumference.

3. A flush-mounted installation box as claimed in claim 1 or 2, **characterized in that** the arc length of the ring arc sections (26, 27; 26a, 27a) is slightly larger than the respective arc length of the remaining ring zone, so that the ring arc sections (26, 27; 26a, 27a) project inwardly in their first stable position.

4. A flush-mounted installation box as claimed in claim 3, **characterized in that** the radial thickness of the ring arc sections (26, 27; 26a, 27a) decreases at least from the center towards the end at which they are mutually connected.

5. A flush-mounted installation box as claimed in one of the preceding claims, **characterized in that** the connections of the ring arc sections (26, 27; 26a, 27a) with each other and with the remaining ring area is produced by means of a film hinge connection.

## Revendications

1. Boîtier de branchement encastrable avec un corps de boîtier en forme de godet, sur le bord libre duquel un anneau adaptateur (16) peut être posé dans différentes positions, l'anneau adaptateur (16) possédant au moins une nervure continue (17, 18, 19) dans laquelle peut être engagée et est engagée après le montage une bande (13) continue du bord libre du boîtier de branchement (10), faisant saillie vers l'intérieur, **caractérisé en ce que** l'anneau adaptateur (16) présente au moins un dispositif de levier coudé bistable composé de deux parties d'anneau en arc de cercle (26, 27 ; 26a, 27a) reliées de manière articulée l'une à l'autre à une extrémité (28, 28a) et reliées de manière articulée à l'autre extrémité (24, 25) au reste de la partie annulaire, qui font saillie vers l'intérieur dans une première position stable et réalisent ainsi une flexibilité de l'anneau et qui s'adaptent dans la circonférence de l'anneau dans la deuxième position stable, après franchissement d'un point mort, et raidissent l'anneau adaptateur (16) dans cette position.

2. Boîtier de branchement encastrable selon la revendication 1, **caractérisé en ce qu'**il est prévu deux dispositifs de levier coudé (26, 27 ; 26a, 27a) diamétralement opposés ou plusieurs répartis uniformément sur 1a circonférence.

3. Boîtier de branchement encastrable selon la revendication 1 ou 2, **caractérisé en ce que** la longueur d'arc des parties d'anneau en arc de cercle (26, 27 ; 26a, 27a) est légèrement plus grande que la longueur d'arc correspondante du reste de la partie d'anneau, de sorte que les parties d'anneau en arc de cercle (26, 27 ; 26a, 27a) font saillie vers l'intérieur dans leur première position stable.

4. Boîtier de branchement encastrable selon la revendication 3, **caractérisé en ce que** l'épaisseur radiale des parties d'anneau en arc de cercle (26, 27 ; 26a, 27a) diminue au moins entre leur milieu et l'extrémité à laquelle elles sont reliées entre elles.

5. Boîtier de branchement encastrable selon l'une quelconque des revendications précédentes, **caractérisé en ce que** les liaisons des parties d'anneau en arc de cercle (26, 27 ; 26a, 27a) entre elles et avec le reste de la partie annulaire sont obtenues par une charnière formée par un film.
